# EUROPÄISCHE PATENTSCHRIFT

(11) **EP 3 378 069 B1**
(45) Veröffentlichungstag und Bekanntmachung des Hinweises auf die Patenterteilung: **04.12.2019**
(21) Anmeldenummer: 16797563.0
(22) Anmeldetag: 17.11.2016
(51) Int. Cl.: H01F 5/02, H01F 27/32, H01F 41/12

(54) **SPULENTRÄGER FÜR EINE ELEKTRISCHE SPULENANORDNUNG UND VERFAHREN ZUR HERSTELLUNG EINER ELEKTRISCHEN SPULENANORDNUNG**
COIL FORMER FOR AN ELECTRICAL COIL ASSEMBLY AND METHOD FOR PRODUCING AN ELECTRICAL COIL ASSEMBLY
PORTE-BOBINE POUR UN ENSEMBLE DE BOBINES ÉLECTRIQUES ET PROCÉDÉ DE FABRICATION D'UN ENSEMBLE DE BOBINES ÉLECTRIQUES

(30) Priorität: 20.11.2015 AT 509922015
(43) Veröffentlichungstag der Anmeldung: 26.09.2018
(73) Patentinhaber: Egston System Electronics Eggenburg GmbH, 3730 Eggenburg (AT)
(72) Erfinder: PRAND-STRITZKO, Ernst, 2091 Langau (AT)
(74) Vertreter: Gibler & Poth Patentanwälte KG
(86) Internationale Anmeldenummer: PCT/EP2016/077961
(87) Internationale Veröffentlichungsnummer: WO 2017/085169

(56) Entgegenhaltungen:
- FR-A1- 2 502 836
- JP-A- S5 683 916
- US-A- 3 605 055
- US-A- 5 175 525

## Beschreibung

Die Erfindung betrifft einen Spulenträger gemäß dem Oberbegriff des Patentanspruches 1.

Es ist bekannt, bei Spulen aus dem Bereich der Elektrotechnik die eigentliche Spulenwicklung auf einem Isolierstoffteil anzuordnen, welcher als Spulenträger bezeichnet ist. Ein derartiger Spulenträger unterstützt den Wickelvorgang, indem dieser etwa hilft die Positionierung der einzelnen Wicklungen der Spulenwicklung sowie die beabsichtige Form der Spule exakter einzuhalten. Weiters isoliert der Spulenträger die Spulenwicklung, bei Spulen, welche auf einem Magnetkern bzw. einfach Kern angeordnet sind, wenigstens bereichsweise elektrisch gegenüber dem Kern, und schützt den Kern beim Wickeln der Spulenwicklung vor den mechanischen Belastungen, welche zu einer Verschlechterung der magnetischen Eigenschaften des Kerns führen können.

Naturgemäß lassen sich Hohlräume zwischen der Spulenwicklung und dem Kern bzw. dem Spulenträger kaum vermeiden. Diese verschlechtern den Wärmetransfer aus der Spulenwicklung in den Kern, und stellen hinsichtlich der zulässigen Verlustleistung der Spulenanordnung einen limitierenden Faktor dar. Es ist daher ferner bekannt, diese Zwischenräume mit einer aushärtbaren Vergussmasse zu füllen. Dies erfolgt oft im Rahmen eines sog. Träufelprozesses, bei welchem die ansonsten fertiggestellte Spulenanordnung derart angeordnet wird, dass ein Teil der äußersten Wickellage direkt von oben zugänglich ist. Nachfolgend wird auf diese äußerste Wickellage flüssige Vergussmasse tropfenweise aufgebracht. Durch Kapillarwirkung und Schwerkraft erfolgt die Verteilung der Vergussmasse durch die Spulenwicklung.

Um bei einem derartigen Prozess so viele Zwischenräume wie möglich zu verfüllen, wird dieser so lange durchgeführt, bis am unteren Ende der Spulenanordnung die Vergussmasse bereits wieder abtropft, sowie eine entsprechend dünnflüssige bzw. niederviskose Vergussmasse gewählt. Nachteilig daran ist, dass der Prozess des Träufelns sehr zeitaufwendig und schmutzig ist. Bereits das Träufeln selbst ist zeitintensiv, da jeweils nur geringe Mengen der Vergussmasse aufgebracht werden können, sodass zwischen zwei Tropfen jeweils gewartet werden muss. Da die Zwischenräume der Spulenwicklung möglichst vollständig von der Vergussmasse ausgefüllt sein sollen, muss eine Vergussmasse gewählt werden, welche eine lange Aushärtzeit und eine geringe Viskosität aufweist, um eine möglichst vollständige Durchdringung der Spulenwicklung zu unterstützen. Dies führt dazu, dass sämtliche Spulenanordnungen nach dem Füllen der Spulenwicklung über einen längeren Zeitraum abgestellt werden müssen, um ein Trocknen der Vergussmasse zu ermöglichen. Zudem führt der Umstand, dass geträufelt werden muss, bis die Vergussmasse wieder aus bzw. von der Spule tropft, dazu, dass der Bereich, in dem dieser Prozessschritt stattfindet durch die abtropfende Vergussmasse verschmutzt wird. Sowohl für den Träufelprozess, als auch die nachfolgend notwendige Trocknung sind daher separate Räumlichkeiten erforderlich.

Alternativ hiezu kann auch eine höherviskose Vergussmasse gewählt werden, wodurch vermieden werden kann, dass abtropfende Vergussmasse die Arbeitsumgebung verschmutzt. Allerdings durchdringt eine solche Vergussmasse nicht sämtliche Hohlräume, wodurch es zu Bereichen der Spule kommt, in welcher keine Vergussmasse angeordnet ist, mit den entsprechenden Nachteilen hinsichtlich der Wärmeabfuhr.

Die Viskosität der Vergussmasse ist dabei in an sich bekannter Weise von der Verarbeitungstemperatur abhängig.

Die FR 2 502 836 A1 beschreibt eine elektrisch isolierte Spule auf einem Spulenträger.

Aus der JP S56 83916 A geht eine Harzummantelte Spule hervor.

Die US 5 175 525 A offenbart einen Transformator mit elektrisch isolierten Primär- und Sekundärspulen.

Die US 3 605 055 A betrifft eine weitere Spule auf einem Spulenträger.

Aufgabe der Erfindung ist es daher einen Spulenträger der eingangs genannten Art anzugeben, mit welchem die genannten Nachteile vermieden werden können, und mit welchem die fertigungstechnisch einfache Bildung einer thermisch hoch belastbaren Spulenanordnung unterstützt wird.

Erfindungsgemäß wird dies durch die Merkmale des Patentanspruches 1 erreicht.

Dadurch kann die Bildung einer thermisch hoch belastbaren Spulenanordnung unterstützt werden. Durch das Fluidaufnahmereservoir und die Fluiddurchtrittsöffnung kann die Vergussmasse bzw. das Fluid direkt an den Bereich befördert werden, welcher für die thermische Belastbarkeit der Spulenanordnung entscheidend ist, nämlich zwischen die innerste Wickellage der Spulenwicklung und den Spulenträger bzw. einem optionalen Kern. Dadurch kann sichergestellt werden, dass dieser Bereich vollständig vom Fluid durchdrungen ist, ohne dass es hierzu erforderlich wäre, so viel Fluid in die Spulenanordnung zu bringen, dass dieses ausläuft. Dadurch wird der betreffende Verarbeitungsplatz nicht verschmutzt. Dadurch kann auf einen separaten Bereich bzw. Raum verzichtet werden. Bei dem gegenständlichen Spulenträger kann weiters in einem einzigen Dosiervorgang die Gesamtmenge an benötigtem Fluid in das Fluidaufnahmereservoir abgegeben werden, ohne dass ein Nachdosieren erforderlich wäre, wodurch die Prozesszeit erheblich verringert werden kann. Weiters kann eine sehr dünnflüssige Vergussmasse verwendet werden, ohne dass es dabei zu einem Austritt der Vergussmasse aus der Spule und der entsprechenden Verschmutzung kommt. Durch die sichere und vollständige Füllung der Zwischenräume in den inneren Wickellagen kann die Wärmeabfuhr nach Innen hin verbessert bzw. sichergestellt werden, wodurch eine derartige Spulenanordnung mit hoher Verlustleistung betrieben werden kann, ohne zu überhitzen bzw. thermisch beschädigt zu werden. Dies ist insbesondere bei Spulen mit einem Kern bzw. einer in deren Inneren angeordneten Kühlung vorteilhaft.

Die Erfindung betrifft ein Verfahren zur Herstellung einer elektrischen Spulenanordnung gemäß dem Patentanspruch 10.

Aufgabe der Erfindung ist es daher ein Verfahren zur Herstellung einer elektrischen Spulenanordnung anzugeben, mit welchem die eingangs genannten Nachteile vermieden werden können, und mit welchem fertigungstechnisch einfach eine thermisch hoch belastbare Spulenanordnung gebildet werden kann. Erfindungsgemäß wird dies durch die Merkmale des Patentanspruches 10 erreicht. Dadurch können die vorstehend geltend gemachten vorteilhaften Wirkungen erzielt werden.

Die Unteransprüche betreffen weitere vorteilhafte Ausgestaltungen der Erfindung. Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform einer elektrischen Spulenanordnung mit einer ersten Ausführungsform eines Spulenträgers in einer ersten axonometrischen Darstellung;
Fig. 2 die Spulenanordnung gemäß Fig. 1 in einer zweiten axonometrischen Darstellung;
Fig. 3 ein Detail der Spulenanordnung gemäß Fig. 1 in Schnittansicht in einer dritten axonometrischen Darstellung;
Fig. 4 den Schnitt gemäß Fig. 3 im Aufriss;
Fig. 5 eine zweite Ausführungsform einer elektrischen Spulenanordnung mit einer zweiten Ausführungsform eines Spulenträgers in einer ersten axonometrischen Darstellung;
Fig. 6 die Spulenanordnung gemäß Fig. 5 in einer zweiten axonometrischen Darstellung;
Fig. 7 die Spulenanordnung gemäß Fig. 5 in Schnittansicht in einer dritten axonometrischen Darstellung; und
Fig. 8 ein Detail der Schnittansicht gemäß Fig. 7 in einer vierten axonometrischen Darstellung.

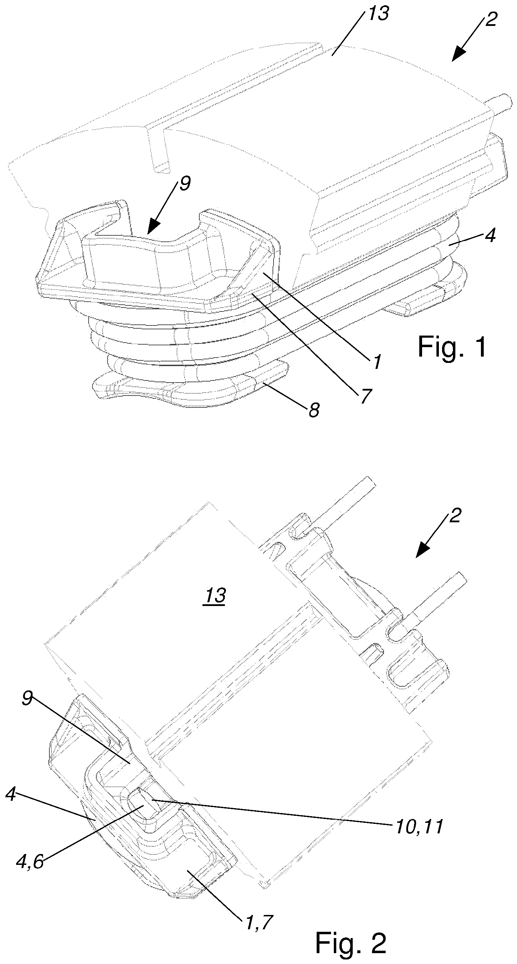

Die Fig. 1 bis 8 zeigen jeweils eine elektrische Spulenanordnung 2 bzw. Teile einer derartige Spulenanordnung umfassend wenigstens einen Kern 13 und wenigstens eine Spulenwicklung 4, welche Spulenwicklung 4 um wenigstens einen Bereich des Kerns 13 gewickelt ist, wobei an wenigstens einem Umfangsabschnitt des Kerns 13 zwischen dem Kern 13 und der Spulenwicklung 4 ein Spulenträger 1 angeordnet ist, wobei der Spulenträger 1 einen Wickelaufnahmebereich 3 für wenigstens einen Umfangsabschnitt der Spulenwicklung 4 aufweist, welcher Wicklungsaufnahmebereich 3 von einer Wicklungsaufnahmebereichsinnenfläche 5 zum Kontakt mit einer innersten Wickellage 6 der Spulenwicklung 4 und wenigstens einem, von der Wicklungsaufnahmebereichsinnenfläche 5 abstehenden ersten Endstück 7 begrenzt ist, wobei an einer, dem Wicklungsaufnahmebereich 3 abgewandten Seite des ersten Endstücks 7, ein wenigstens bereichsweise umschlossenes Fluidaufnahmereservoir 9 angeordnet ist, wobei das Fluidaufnahmereservoir 9 mit einer Fluiddurchtrittsöffnung 10 mit dem Wicklungsaufnahmebereich 3 verbunden ist, wobei die Fluiddurchtrittsöffnung 10 angrenzend an die Wicklungsaufnahmebereichsinnenfläche 5 angeordnet ist, wobei die Fluiddurchtrittsöffnung 10 des Spulenträgers 1 im Wesentlichen parallel zu einer Spulenachse 15 angeordnet ist.

Dadurch kann die Bildung einer thermisch hoch belastbaren Spulenanordnung 2 unterstützt werden. Durch das Fluidaufnahmereservoir 9 und die Fluiddurchtrittsöffnung 10 kann die Vergussmasse bzw. das Fluid direkt an den Bereich befördert werden, welcher für die thermische Belastbarkeit der Spulenanordnung 2 entscheidend ist, nämlich zwischen die innerste Wickellage 6 der Spulenwicklung 4 und den Spulenträger 1 bzw. einem optionalen Kern 13. Dadurch kann sichergestellt werden, dass dieser Bereich vollständig vom Fluid durchdrungen ist, ohne dass es hiezu erforderlich wäre, so viel Fluid in die Spulenanordnung 2 zu bringen, dass dieses ausläuft. Dadurch wird der betreffende Verarbeitungsplatz nicht verschmutzt. Dadurch kann auf einen separaten Bereich bzw. Raum verzichtet werden. Bei dem gegenständlichen Spulenträger 1 kann weiters in einem einzigen Dosiervorgang die Gesamtmenge an benötigtem Fluid in das Fluidaufnahmereservoir 9 abgegeben werden, ohne dass ein Nachdosieren erforderlich wäre, wodurch die Prozesszeit erheblich verringert werden kann. Weiters kann eine sehr dünnflüssige Vergussmasse verwendet werden, ohne dass es dabei zu einem Austritt der Vergussmasse aus der Spulenanordnung 2 und der entsprechenden Verschmutzung kommt.

Durch die sichere und vollständige Füllung der Zwischenräume in den inneren Wickellagen 5 kann die Wärmeabfuhr nach Innen hin verbessert bzw. sichergestellt werden, wodurch eine derartige Spulenanordnung mit hoher Verlustleistung betrieben werden kann, ohne zu überhitzen bzw. thermisch beschädigt zu werden.

Dies ist insbesondere bei Spulenanordnungen 2 mit einem Kern 13 bzw. einer in deren Inneren angeordneten Kühlung vorteilhaft.

Die gegenständliche Erfindung betrifft den Bereich der wenigstens bereichsweise vergossenen Spulenanordnungen 2. Der Verguss erfolgt dabei mit einem aushärtbaren Fluid, etwa einem Kunstharz. Entsprechende Fluide bzw. Harze oder Vergussmassen sind an sich bekannt.

Eine gegenständliche Spulenanordnung 2 kann mit oder ohne Kern 13 ausgebildet sein. Die gegenständlich in den Fig. 1 bis 8 dargestellten Ausführungsformen einer gegenständlichen Spulenanordnung weisen jeweils einen Kern 13 auf, wobei jedoch auch vorgesehen sein kann, dass eine Spulenanordnung 2 keinen magnetisch wirksamen Kern aufweist. Solche Spulen werden auch als Luftspulen bezeichnet, selbst wenn diese etwa einen Kunststoffkern aufweisen. Weiters kann vorgesehen sein, anstelle bzw. zusammen mit dem dargestellten Kern 13 eine Flüssigkeitskühlung durch die Spulenanordnung 2 zu führen.

Der gegenständliche Spulenträger 1 kann auch als Spulenisolierkörper bzw. als Wickelkopf bezeichnet werden. Der Spulenträger 1 ist bevorzugt als Isolierstoffteil, insbesondere als Kunststoffspritzgussteil, ausgebildet.

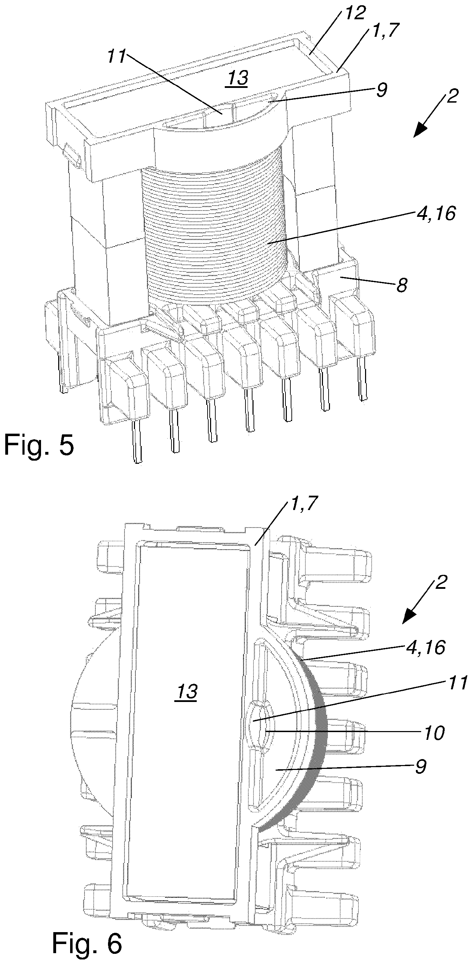

Der Spulenträger 1 weist einen Wicklungsaufnahmebereich 3 für wenigstens einen Umfangsabschnitt einer Spulenwicklung 4 auf. Bei der ersten Ausführungsform gemäß den Fig. 1 bis 4 ist vorgesehen, dass die betreffende Spulenwicklung 4 nur mit einem geringen Umfangsabschnitt in den Wicklungsaufnahmebereichen 3 der beiden Spulenträger 1 angeordnet sind. Demgegenüber ist bei der zweiten Ausführungsform eines Spulenträgers 1 gemäß den Fig. 5 bis 8 vorgesehen, dass die betreffende Spulenwicklung 4 im Wesentlichen vollständig innerhalb des Wicklungsaufnahmebereichs 3 angeordnet ist.

Der Wicklungsaufnahmebereich 3 weist eine Wicklungsaufnahmebereichsinnenfläche 5 auf, an welcher - im Falle einer auf dem Spulenträger 1 angeordneten Spulenwicklung 4 - die innerste Wickellage 6 der Spulenwicklung 4 anliegt bzw. nächst zu dieser angeordnet ist.

Die Wicklungsaufnahmebereichsinnenfläche 5 ist von wenigstens einem abstehenden ersten Endstück 7 begrenzt, welches bevorzugt als erste Endscheibe ausgebildet ist, wobei jedoch auch konische oder anders geformte Endstücke 7, 8 vorgesehen sein können. Bevorzugt ist die Wicklungsaufnahmebereichsinnenfläche 5 an einem vom ersten Endstück 7 abgewandten Seite durch ein zweites Endstück 8 begrenzt. Der gegenständlich als Endstück 7, 8 bezeichnete Vorrichtungsteil wird auch als Wickelflansch bezeichnet werden.

An einer dem Wicklungsaufnahmebereich 3 abgewandten Seite des ersten Endstücks 7 ist ein Fluidaufnahmereservoir 9 angeordnet. Das Fluidaufnahmereservoir 9 ist dabei wenigstens bereichsweise umschlossen, insbesondere durch Wände, welche vorzugsweise einstückig mit dem restlichen Spulenträger 1 ausgebildet sind.

Dass Fluidaufnahmereservoir 9 kann im wesentlichen einen beliebigen Querschnitt und eine beliebige Höhe aufweisen, wobei jedoch Querschnitt und Höhe einen Einfluss auf das Abfließverhalten des Fluids haben können, und entsprechend an die weitere Form des Spulenkörpers angepasst werden können.

Gemäß den bevorzugten Ausführungsformen ist das Fluidaufnahmereservoir 9 wenigstens dreiseitig umschlossen, wobei gemäß der ersten Ausführungsform eine Umschließung in Form dreier in wesentlichen rechtwinkelig zueinander angeordneter Wände vorgesehen ist, und gemäß der zweiten Ausführungsform eine umfänglich geschlossene Umschließung in Form einer Zylindersegmentmantelfläche sowie einer an diese anschließenden planen Fläche. Bei einem einseitig offenen Fluidaufnahmereservoir 9 ist vorgesehen, dass dieses durch den Kern 13 bzw. einen anderen innen angeordneten Bauteil geschlossen wird, sobald der Spulenträger 1 mit dem Kern 13 in Anlage gelangt, wie etwa bei der Ausführungsform gemäß den Fig. 1 bis 4.

Das Fluidaufnahmereservoir 9 ist mit einer Fluiddurchtrittsöffnung 10 mit dem Wicklungsaufnahmebereich 3 verbunden. Die in dem ersten Endstück 7 angeordnete Fluiddurchtrittsöffnung 10 ist dabei angrenzend an die Wicklungsaufnahmebereichsinnenfläche 5 angeordnet. Ein in das Fluidaufnahmereservoir 9 eingefülltes Fluid fließt daher durch die Fluiddurchtrittsöffnung 10 entlang der Wicklungsaufnahmebereichsinnenfläche 5 in den Wicklungsaufnahmebereich 3. Dabei gelangt das Fluid unmittelbar in den Bereich der innersten Lage der Spulenwicklung 4, welche - bei Ausbildung der Spulenanordnung 2 umfassend einen Kern 13 - nächst dem Kern 13 angeordnet ist.

Im Betrieb wird die Spulenwicklung 4 direkt von elektrischem Strom durchflossen, wodurch Verlustleistung in Form von Wärme direkt in den Spulenwicklungen 4 entsteht, und diese aufheizt. Da die Spulenwicklung 4 selbst die Wärmequelle ist, erwärmt sich diese sehr schnell, und vor allem deutlich schneller als Bauteile, welche in Kontakt mit der Spulenwicklung 4 stehen. Die Spulenwicklung 4 gibt entsprechend Wärme an die Umgebung ab, wobei bei Vorhandensein eines Kerns 13 vor allem Wärme an diesen abgegeben wird. Der Kern 13 weist in der Regel eine deutlich höhere Masse auf, als die Spulenwicklung 4 selbst, und steht zudem bei vielen elektromechanischen und/oder elektromagnetischen Apparaturen in direktem Kontakt mit einem Wärmetauscher, etwa einem Kühlkörper bzw. einer Flüssigkeitskühlung. Die primäre Kühlung der Spulenwicklung 4 erfolgt daher durch Wärmeabfuhr in den Kern 13 bzw. eine an dessen Stelle angeordnete Kühleinrichtung, weshalb dem Bereich zwischen der Wicklungsaufnahmebereichsinnenfläche 5 und der bzw. den innersten Windungen bzw. Wickellagen 6 der Spulenwicklung 4 besondere Bedeutung bei der Wärmeabfuhr zukommt. Durch die gegenständliche Anordnung der Fluiddurchtrittsöffnung 10 wird das Fluid direkt dort eingefüllt, wo es für den späteren Betrieb der Spulenanordnung 2 am wichtigsten ist. Dadurch kann sichergestellt werden, dass dieser Bereich tatsächlich im Wesentlichen vollständig von dem Fluid ausgefüllt wird, und derart ein geringer Wärmeübergangswiderstand von der Spulenwicklung 4 zum Kern 13 erzielt wird.

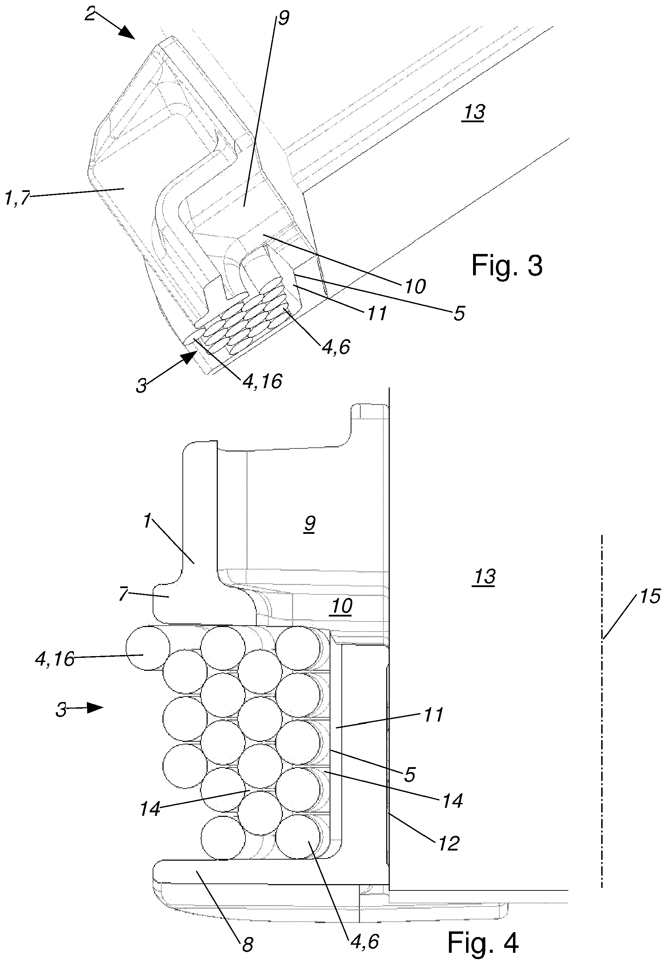

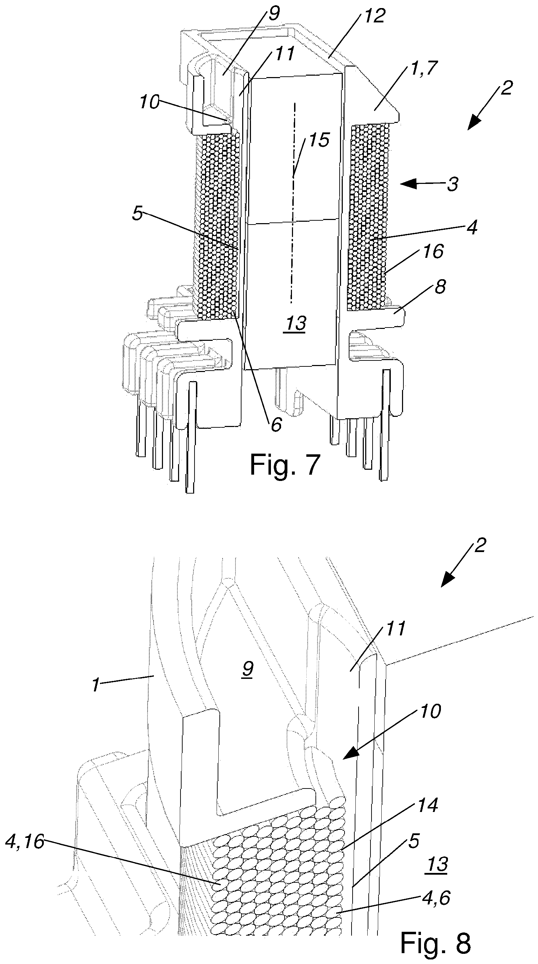

Je nach Spulenwicklung 4 und Spulenträger 1 besteht ein gewisser Abstand zwischen der Wicklungsaufnahmebereichsinnenfläche 5 und der innersten Wickellage 6. Dieser Spalt vereinfacht das Einfüllen des Fluids in die Zwischenräume der Spulenwicklung 4. Die Weite bzw. Größe des betreffenden Abstandes kann jedoch auch sehr gering ausfallen, da es an sich Ziel des Wickelvorgangs ist, dass die einzelnen Wickellagen 6 möglichst dicht an der Wicklungsaufnahmebereichsinnenfläche 5 anliegen. Gemäß einer bevorzugten Weiterbildung der gegenständlichen Erfindung ist vorgesehen, dass in der Wicklungsaufnahmebereichsinnenfläche 5 ein Fluidkanal 11 angeordnet bzw. ausgebildet ist, und dass die, in dem ersten Endstück 7 angeordnete Fluiddurchtrittsöffnung 10 angrenzend an den Fluidkanal 11 angeordnet ist. Der Fluidkanal 11 ist bevorzugt als einseitig offene, insbesondere flache Rinne ausgebildet, wie beispielsweise in Fig. 3 und 8 dargestellt. Mittels des Fluidkanals 11 kann das Eindringen des Fluids in die Spulenwicklung 4 sowie den Zwischenraum 14 zwischen Spulenwicklung 4 und Kern 13 beschleunigt werden.

Bevorzugt ist der Fluidkanal 11 im Wesentlichen mittig in der Wicklungsaufnahmebereichsinnenfläche 5 angeordnet. Dadurch kann der in diesem Bereich typischerweise anzutreffende größte Abstand zwischen der Wicklungsaufnahmebereichsinnenfläche 5 und der innersten Wickellage 6 genutzt werden, um das Eindringen des Fluids in die Spulenwicklung 4 weiter zu beschleunigen.

Bevorzugt ist vorgesehen, dass eine gegenständliche Spulenanordnung 2 zusammen mit einem Kern 13 bzw. einem Magnetkern betrieben wird. Derartige Kerne 13 sind im Zusammenhang mit elektrischen Spulenanordnungen 2 hinlänglich bekannt. Bevorzugt ist daher vorgesehen, dass der Spulenträger 1 an einer, dem Wicklungsaufnahmebereich 3 abgewandten Seite einen Kernaufnahmebereich 12 aufweist. Dabei ist entweder vorgesehen, dass der Spulenträger 1 auf einem Kern 13 angeordnet wird, oder dass der Kern 13 innerhalb des Spulenträgers 1 angeordnet wird.

Nachfolgend werden die bevorzugten Ausführungen der Erfindung zusammen mit einem Kern beschrieben, wobei jedoch - wie bereits dargelegt - aus Spulenanordnungen 2 ohne Kern 13 vorgesehen sein können, beispielsweise sog. Luftspulen bzw. Spulen, an denen in dem Bereich, in welchem ein Kern 13 angeordnet werden kann, ein Teil einer Kühleinrichtung angeordnet ist. Bei Spulenanordnungen 2 ohne Kern 13 kann entweder der Kernaufnahmebereich 12 am Spulenträger 1 entfallen, oder aber der Aufnahme eines anderen Bauteils, etwa eines Teils einer Kühlvorrichtung dienen.

Die Fig. 1 bis 8 zeigen jeweils eine elektrische Spulenanordnung 2 mit einem Kern 13 bzw. Spulenkern und wenigstens einer Spulenwicklung 4, welche Spulenwicklung 4 um wenigstens einen Bereich des Kerns 13 gewickelt ist, wobei an wenigstens einem Umfangsabschnitt des Kerns 13 zwischen dem Kern 13 und der Spulenwicklung 4 ein gegenständlicher Spulenträger 1 angeordnet ist.

Bevorzugt ist in Zwischenräumen 14 zwischen und/oder angrenzend an einzelne Windungen der Spulenwicklung 4 ein ausgehärtetes Fluid angeordnet, wobei das Fluid insbesondere an der nächst dem Kern 13 angeordneten innersten Wickellage 6 der Spulenwicklung 4 angeordnet ist, wodurch die Wärmeabfuhr aus der Spulenwicklung 4 unterstützt werden kann.

Die Fluiddurchtrittsöffnung 10 des Spulenträgers 1 ist im Wesentlichen parallel zu einer Spulenachse 15 angeordnet bzw. im Wesentlichen normal zu einer Umlaufrichtung des wenigstens einen Leiters der Spulenwicklung 4. Diese Art der Anordnung der Spulenwicklung 4 gegenüber der Fluiddurchtrittsöffnung 10 bzw. des Fluidaufnahmereservoirs 9 unterstützt die Verteilung des Fluids im Zuge des Einfüllvorganges. Das über die Fluiddurchtrittsöffnung 10 einfließende Fluid wird durch die quer zur Einflussrichtung verlaufenden Windungen und Freiräume der Spulenwicklung 4 geleitet, und fließt entlang der Windungen und Freiräume der Spulenwicklung 4 weiter, wodurch das Fluid um die gesamte Spulenwicklung 4 herum geleitet wird.

Die vorstehend angeführte Wirkung wird weiters unterstützt, wenn - wie bevorzugt vorgesehen - wenigstens eine Wickellage 6, 16 der Spulenwicklung 4 im Wesentlichen fluiddicht ausgebildet ist, wobei bevorzugt vorgesehen ist, dass bereits die innerste Wickellage 6 fluiddicht ausgebildet ist. Bei der Ausführungsform gemäß Fig. 1 bis 4 wird die Fluiddichtheit zwischen der innersten und der an diese angrenzenden Wickellage 6 erzielt.

Die Spulenwicklung 4 kann einlagig oder mehrlagig ausgebildet sein, wobei bevorzugt vorgesehen ist, dass die Spulenwicklung 4 als mehrlagige Spulenwicklung 4 ausgebildet ist, wobei insbesondere vorgesehen sein kann, dass die Spulenwicklung 4 eine konische Spulenwicklung 4 ist. Bei derartigen Spulenwicklung 4 ist es erforderlich, dass der Leiter der Spulenwicklung 4 wenigstens ein mal, darunter liegende Windungen der Spulenwicklung 4 kreuzt bzw. überspringt. Bevorzugt ist vorgesehen, dass die Spulenwicklung 4 im Bereich der Fluiddurchtrittsöffnung 10 kreuzungsfrei ausgebildet ist, wodurch die Verteilung des Fluids innerhalb der Spulenwicklung 4 verbessert werden kann, und ein Fluidaustritt und damit eine Verschmutzung der Umgebung verhindert werden kann.

Die Fluiddichtheit ergibt sich bei mehrlagigen Spulenwicklungen 4, insbesondere bei sog. Stufenwicklungen, aus einem bevorzugt vorgesehen orthozyklischen Wickelbild, ist jedoch ach bei anderen Wickelbildern möglich. Insbesondere bei Spulenwicklungen 4, welche aus einem dünnen Draht gewickelt sind und eine hohe Anzahl Wickellagen 6 aufweisen, kann eine Fluiddichtheit auch bei einem so. wilden Wickelbild erreicht werden.

Die Fig. 1 bis 4 zeigen eine erste Ausführungsform einer elektrischen Spulenanordnung 2 mit einer ersten Ausführungsform eines Spulenträgers 1. Die Spulenanordnung 2 ist dabei als Teilsegment eines Stators eines Elektromotors ausgebildet.

Auf dem Kern 13 ist stirnseitig je ein Spulenträger 1 angeordnet, wobei einer der beiden Spulenträger 1 als gegenständlicher Spulenträger 1 umfassen ein Fluidaufnahmereservoir 9 und eine Fluiddurchtrittsöffnung 10 ausgebildet ist.

Dieser Spulenträger 1 weist einen Wicklungsaufnahmebereich 3 auf, welcher an einer Seite durch einen Steg berandet wird, welcher die Wicklungsaufnahmebereichsinnenfläche 5 trägt, und an welchem das erste Endstück 7 und das zweite Endstück 8 angeformt sind. Die beiden Endstücke 7, 8 sind zum Wicklungsaufnahmebereich 3 hin im Wesentlichen flach ausgebildet. Das erste Endstück 7 weist neben den Begrenzungswänden des Fluidaufnahmereservoirs 9 weiters Versteifungsrippen und eine Anschlagleiste auf, mit welcher der Spulenträger 1 am Kern 13 anliegt.

Die Fig. 5 bis 8 zeigen eine zweite Ausführungsform einer elektrischen Spulenanordnung 2 mit einer zweiten Ausführungsform eines Spulenträgers 1. Die Spulenanordnung 2 ist dabei Teil eines Transformators, einer Drossel oder einer Magnetspule.

Der Spulenträger 1 gemäß der zweiten Ausführungsform ist derart ausgebildet, dass dieser sowohl den gesamten Kern 13 der Spulenanordnung 2 umschließt, und gleichzeitig die gesamten Spulenwicklungen 4 aufnimmt. An der Oberseite ist das Fluidaufnahmereservoir 9 in Form eines allseitig durch Teile des Spulenträgers 1 umschlossenen Zylindersegments mit der Fluiddurchtrittsöffnung 10 angeordnet. Der Spulenträger 1 gemäß der zweiten Ausführungsform weist die Grundform eines Quaders mit Endscheiben auf.

Bei einem Verfahren zur Herstellung einer elektrischen Spulenanordnung 2 mit einem gegenständlichen Spulenträger 1 und einem Kern 13 ist vorgesehen, dass der wenigstens eine Spulenträger 1 auf dem Kern 13 angeordnet wird. Nachfolgend wird die wenigstens eine Spulenwicklung 4 um den Spulenträger 1 herum auf wenigstens einen Teil des Kerns 13 gewickelt. Die Spulenwicklung 4 wird dabei derart um den Kern 13 bzw. den Spulenträger 1 gewickelt, dass die Spulenachse 15 der Spulenwicklung 4 im Wesentlichen parallel zur Fluiddurchtrittsöffnung 10 des Spulenträgers 1 angeordnet ist. Nachfolgend wird die Fluiddurchtrittsöffnung 10 im Wesentlichen senkrecht positioniert, indem die gesamte zu diesem Zeitpunkt bestehende Spulenanordnung 2 derart positioniert wird, dass die Fluiddurchtrittsöffnung 10 in besagter Lage angeordnet ist. Besonders bevorzugt ist dabei vorgesehen, die Spulenanordnung 2 derart auszubilden, dass es möglich ist, diese abzustellen, und dass die Fluiddurchtrittsöffnung 10 bei abgestellter Spulenanordnung 2 auch in besagter Lage angeordnet ist. Dadurch ist es möglich, die Spulenanordnung 2 abzustellen und in diesem Zustand mit dem Fluid zu befüllen.

Selbstverständlich ist eine Herstellung einer Spulenanordnung 2 ohne Kern 13 entsprechend dem gegenständlichen Verfahren möglich und vorgesehen, wobei der Verfahrensschritt der Anordnung des Kerns 13 innerhalb des Spulenträgers 1 entfällt.

Nachdem die Spulenanordnung 2 entsprechend ausgerichtet wurde, wird eine erste Menge eines aushärtbaren Fluides in das Fluidaufnahmereservoir 9 gefüllt, woraufhin das Fluid durch die Fluiddurchtrittsöffnung 10 in die Spulenwicklung 4 gelangt. Besonders bevorzugt ist dabei vorgesehen, dass in einem Dosierschritt die gesamte Fluidmenge zugeführt wird, sodass kein Nachdosieren erforderlich ist.

Dabei muss selbstverständlich das Fluidaufnahmereservoir 9 entsprechend groß ausgebildet sein, eine solche Fluidmenge aufzunehmen.

Neben der Abgabe der gesamte Fluidmenge in einem einzigen Dossierschritt, kann es, etwa prozesstechnisch, vorteilhaft sein, die Fluidmenge in mehreren Einzeldosen in das Fluidaufnahmereservoir 9 zu füllen. Durch Zerteilung dieses Prozessschrittes in eine Abfolge von Einzelschritten kann eine Anpassung an einen vorgegebenen Prozesstakt erfolgen.

Nachfolgend wird das Fluid ausgehärtet, etwa indem die Spulenanordnung 2 in einem, gegebenenfalls temperierten oder klimatisierten, Raum abgestellt wird. Gemäß einer besonders bevorzugten Weiterbildung dieses Verfahrens ist vorgesehen, dass eine Prozesstemperatur und eine Viskosität des Fluids derart gewählt werden, dass das Fluid beim Erreichen einer äußersten Wickellage 16 der Spulenwicklung 4 geliert. Dadurch kann erreicht werden, dass das Fluid beim Austritt aus der Spulenwicklung 4 nicht mehr tropffähig ist. Dadurch kann der Verbrauch an Fluid gering gehalten werden, und gleichzeitig können Verschmutzungen verhindert werden.

## Patentansprüche

1. Spulenträger (1) für eine elektrische Spulenanordnung (2), wobei der Spulenträger (1) einen Wicklungsaufnahmebereich (3) für wenigstens einen Umfangsabschnitt einer Spulenwicklung (4) aufweist, welcher Wicklungsaufnahmebereich (3) von einer Wicklungsaufnahmebereichsinnenfläche (5) zum Kontakt mit einer innersten Wickellage (6) der Spulenwicklung (4) und wenigstens einem, von der Wicklungsaufnahmebereichsinnenfläche (5) abstehenden ersten Endstück (7) begrenzt ist, **dadurch gekennzeichnet, dass** an einer, dem Wicklungsaufnahmebereich (3) abgewandten Seite des ersten Endstücks (7), ein wenigstens bereichsweise umschlossenes Fluidaufnahmereservoir (9) angeordnet ist, dass das Fluidaufnahmereservoir (9) mit einer Fluiddurchtrittsöffnung (10) mit dem Wicklungsaufnahmebereich (3) verbunden ist, und dass die Fluiddurchtrittsöffnung (10) angrenzend an die Wicklungsaufnahmebereichsinnenfläche (5) angeordnet ist.

2. Spulenträger (1) nach Anspruch 1, **dadurch gekennzeichnet, dass** in der Wicklungsaufnahmebereichsinnenfläche (5) ein Fluidkanal (11) angeordnet ist, und dass die Fluiddurchtrittsöffnung (10) angrenzend an den Fluidkanal (11) angeordnet ist.

3. Spulenträger (1) nach Anspruch 2, **dadurch gekennzeichnet, dass** der Fluidkanal (11) im Wesentlichen mittig in der Wicklungsaufnahmebereichsinnenfläche (5) angeordnet ist.

4. Spulenträger (1) nach einem der Ansprüche 1 bis 3, **dadurch gekennzeichnet, dass** der Spulenträger (1) an einer, dem Wicklungsaufnahmebereich (3) abgewandten Seite einen Kernaufnahmebereich (12) aufweist.

5. Elektrische Spulenanordnung (2) mit wenigstens einer Spulenwicklung (4), welche Spulenwicklung (4) an wenigstens einem Umfangsabschnitt an einem Spulenträger (1) nach einem der Ansprüche 1 bis 4 angeordnet ist, wobei die Fluiddurchtrittsöffnung (10) des Spulenträgers (1) im Wesentlichen parallel zu einer Spulenachse (15) angeordnet ist.

6. Elektrische Spulenanordnung (2) nach Anspruch 5, **dadurch gekennzeichnet, dass** die elektrische Spulenanordnung (2) einen Kern (13) aufweist, dass die Spulenwicklung (4) um wenigstens einen Bereich des Kerns (13) gewickelt ist, und dass der Spulenträger (1) an wenigstens einem Umfangsabschnitt des Kerns (13) zwischen dem Kern (13) und der Spulenwicklung (4) angeordnet ist.

7. Elektrische Spulenanordnung (2) nach Anspruch 5 oder 6, **dadurch gekennzeichnet, dass** die Spulenwicklung (4) im Bereich der Fluiddurchtrittsöffnung (10) kreuzungsfrei ausgebildet ist.

8. Elektrische Spulenanordnung (2) nach Anspruch 6 oder 7, **dadurch gekennzeichnet, dass** in Zwischenräumen (14) zwischen und/oder angrenzend an einzelne Windungen der Spulenwicklung (4) ein ausgehärtetes Fluid angeordnet ist, wobei das Fluid insbesondere an der nächst dem Kern (13) angeordneten innersten Wickellage (6) der Spulenwicklung (4) angeordnet ist.

9. Elektrische Spulenanordnung (2) nach einem der Ansprüche 5 bis 8, **dadurch gekennzeichnet, dass** wenigstens eine Wickellage (6, 16) der Spulenwicklung (4) im Wesentlichen fluiddicht ausgebildet ist.

10. Verfahren zur Herstellung einer elektrischen Spulenanordnung (2), wobei wenigstens eine Spulenwicklung (4) wenigstens bereichsweise um einen Spulenträger (1) nach einem der Ansprüche 1 bis 4 herum gewickelt wird, wobei eine Spulenachse (15) der Spulenwicklung (4) im Wesentlichen parallel zur Fluiddurchtrittsöffnung (10) des Spulenträgers (1) angeordnet ist, wobei nachfolgend die Fluiddurchtrittsöffnung (10) im Wesentlichen senkrecht positioniert wird, wobei nachfolgend eine erste Menge eines aushärtbaren Fluides in das Fluidaufnahmereservoir (9) gefüllt wird, wobei nachfolgend das Fluid ausgehärtet wird.

11. Verfahren nach Anspruch 10, **dadurch gekennzeichnet, dass** - vor dem Wickeln der Spulenwicklung (4) - der Spulenträger (1) auf einem Kern (13) angeordnet wird.

12. Verfahren nach Anspruch 10 oder 11, **dadurch gekennzeichnet, dass** eine Prozesstemperatur und eine Viskosität des Fluids derart gewählt werden, dass das Fluid beim Erreichen einer äußersten Wickellage (16) der Spulenwicklung (4) geliert.

## Claims

1. A coil support (1) for an electrical coil arrangement (2), wherein the coil support (1) comprises a winding receptacle region (3) for at least one circumferential portion of a coil winding (4), which winding receptacle region (3) is delimited by a winding receptacle region inner surface (5) for contact with an innermost winding layer (6) of the coil winding (4) and at least one first end piece (7) protruding away from the winding receptacle region inner surface (5), **characterized in that** a fluid receptacle reservoir (9), which is enclosed at least in regions, is arranged on a side of the first end piece (7) facing away from the winding receptacle region (3), the fluid receptacle reservoir (9) is connected using a fluid passage opening (10) to the winding receptacle region (3), and the fluid passage opening (10) is arranged adjoining the winding receptacle region inner surface (5).

2. The coil support (1) according to Claim 1, **characterized in that** a fluid duct (11) is arranged in the winding receptacle region inner surface (5), and the fluid passage opening (10) is arranged adjoining the fluid duct (11).

3. The coil support (1) according to Claim 2, **characterized in that** the fluid duct (11) is arranged essentially centrally in the winding receptacle region inner surface (5).

4. The coil support (1) according to any one of Claims 1 to 3, **characterized in that** the coil support (1) comprises a core receptacle region (12) on a side facing away from the winding receptacle region (3).

5. An electrical coil arrangement (2) having at least one coil winding (4), which coil winding (4) is arranged on at least one circumferential portion on a coil support (1) according to any one of Claims 1 to 4, wherein the fluid passage opening (10) of the coil support (1) is arranged substantially parallel to a coil axis (15).

6. The electrical coil arrangement (2) according to Claim 5, **characterized in that** the electrical coil arrangement (2) comprises a core (13), the coil winding (4) is wound around at least one region of the core (13), and the coil support (1) is arranged, on at least one circumferential section of the core (13), between the core (13) and the coil winding (4).

7. The electrical coil arrangement (2) according to Claim 5 or 6, **characterized in that** the coil winding (4) is formed without intersections in the region of the fluid passage opening (10).

8. The electrical coil arrangement (2) according to Claim 6 or 7, **characterized in that** a cured fluid is arranged in intermediate spaces (14) between and/or adjoining on individual turns of the coil winding (4), wherein the fluid is arranged in particular on the innermost winding layer (6) of the coil winding (4) arranged closest to the core (13).

9. The electrical coil arrangement (2) according to any one of Claims 5 to 8, **characterized in that** at least one winding layer (6, 16) of the coil winding (4) is formed essentially fluid-tight.

10. A method for producing an electrical coil arrangement (2), wherein at least one coil winding (4) is wound at least in regions around a coil support (1) according to any one of Claims 1 to 4, wherein a coil axis (15) of the coil winding (4) is arranged substantially parallel to the fluid passage opening (10) of the coil support (1), wherein subsequently the fluid passage opening (10) is positioned substantially vertically, wherein subsequently a first quantity of a curable fluid is poured into the fluid receptacle reservoir (9), wherein subsequently the fluid is cured.

11. The method according to Claim 10, **characterized in that** - before the winding of the coil winding (4) - the coil support (1) is arranged on a core (13).

12. The method according to Claim 10 or 11, **characterized in that** a process temperature and a viscosity of the fluid are selected in such a way that the fluid gels upon reaching an outermost winding layer (16) of the coil winding (4).

## Revendications

1. Support d'enroulement (1) pour un agencement de bobine électrique (2), lequel support d'enroulement (1) présente une zone de réception de l'enroulement (3) pour au moins une partie de circonférence d'un enroulement de bobine (4), laquelle zone de réception de l'enroulement (3) est délimitée par une surface intérieure de zone de réception de l'enroulement (5) venant en contact avec une couche d'enroulement la plus intérieure (6) de l'enroulement de bobine (4) et par au moins une première pièce d'extrémité (7) dépassant de la surface intérieure de zone de réception de l'enroulement (5), **caractérisé en ce qu'**est disposé, sur le côté de la première pièce d'extrémité (7) opposé à la zone de réception de l'enroulement (3), un réservoir collecteur de fluide (9) au moins partiellement clos, **en ce que** le réservoir collecteur de fluide (9) communique par une ouverture de passage de fluide (10) avec la zone de réception de l'enroulement (3) et **en ce que** l'ouverture de passage de fluide (10) est contiguë à la surface intérieure de la zone de réception de l'enroulement (5).

2. Support d'enroulement (1) selon la revendication 1, **caractérisé en ce qu'**un canal de fluide (11) est disposé dans la surface intérieure de la zone de réception de l'enroulement (5) et **en ce que** l'ouverture de passage de fluide (10) est contiguë au canal de fluide (11).

3. Support d'enroulement (1) selon la revendication 2, **caractérisé en ce que** le canal de fluide (11) est disposé pour l'essentiel au centre de la surface intérieure de la zone de réception de l'enroulement (5).

4. Support d'enroulement (1) selon l'une des revendications 1 à 3, **caractérisé en ce que** le support d'enroulement (1) présente une zone de réception du noyau (12) sur une face opposée à la zone de réception de l'enroulement (3).

5. Agencement d'enroulement électrique (2) avec au moins un enroulement de bobine (4), lequel enroulement de bobine (4) est disposé au moins sur une partie de la circonférence sur un support d'enroulement (1) selon l'une des revendications 1 à 4, dans laquelle l'ouverture de passage de fluide (10) du support d'enroulement (1) est disposée de façon sensiblement parallèle à un axe de bobine (15).

6. Agencement d'enroulement électrique (2) selon la revendication 5, **caractérisée en ce que** l'agencement d'enroulement électrique (2) présente un noyau (13), **en ce que** l'enroulement de bobine (4) est enroulé autour d'au moins une zone du noyau (13) et **en ce que** le support d'enroulement (1) est disposé sur une partie de la circonférence du noyau (13) entre le noyau (13) et l'enroulement de bobine (4).

7. Agencement d'enroulement électrique (2) selon la revendication 5 ou 6, **caractérisée en ce que** l'enroulement de bobine (4) est réalisé sans croisement au niveau de l'ouverture de passage de fluide (10).

8. Agencement d'enroulement électrique (2) selon la revendication 6 ou 7, **caractérisée en ce qu'**un fluide durcissable est disposé dans les interstices (14) entre les différents tours de l'enroulement de bobine (4) et/ou au voisinage de ceux-ci, le fluide étant en particulier disposé sur la couche d'enroulement (6) de l'enroulement de bobine (4) la plus proche du noyau (13).

9. Agencement d'enroulement électrique (2) selon l'une des revendications 5 à 8, **caractérisée en ce qu'**au moins une couche d'enroulement (6, 16) de l'enroulement de bobine (4) est sensiblement étanche au fluide.

10. Procédé pour la fabrication d'un agencement d'enroulement électrique (2), dans lequel au moins un enroulement de bobine (4) est enroulé au moins par zones autour d'un support d'enroulement (1) selon l'une des revendications 1 à 4, un axe de bobine (15) de l'enroulement de bobine (4) étant disposé de façon sensiblement parallèle à l'ouverture de passage de fluide (10) du support d'enroulement (1), dans lequel l'ouverture de passage de fluide (10) est ensuite positionnée de façon sensiblement verticale, dans lequel le réservoir collecteur de fluide (9) est ensuite rempli avec une première quantité d'un fluide durcissable, dans lequel le fluide est ensuite durci.

11. Procédé selon la revendication 10, **caractérisé en ce qu'**avant l'enroulage de l'enroulement de bobine (4), le support d'enroulement (1) est disposé sur un noyau (13).

12. Procédé selon la revendication 10 ou 11, **caractérisé en ce qu'**une température de process et une viscosité du fluide sont choisies de telle manière que le fluide gélifie lorsqu'il atteint une couche d'enroulement la plus extérieure (16) de l'enroulement de bobine (4).
